# EUROPEAN PATENT SPECIFICATION

(11) **EP 4 505 249 B1**
(45) Date of publication and mention of the grant of the patent: **30.09.2026**
(21) Application number: 23717347.1
(22) Date of filing: 31.03.2023
(51) Int. Cl.: G03B 21/56, G03B 21/60, G03B 21/54

(54) **SPECKLE MITIGATION FOR PROJECTION SCREENS**
SPECKLE-ABSCHWÄCHUNG FÜR PROJEKTIONSSCHIRME
ATTÉNUATION DE CHATOIEMENT POUR ÉCRANS DE PROJECTION

(30) Priority: 07.04.2022 EP 22167096; 07.04.2022 US 202263362624 P
(43) Date of publication of application: 12.02.2025
(73) Proprietor: Dolby Laboratories Licensing Corporation, San Francisco, CA 94103 (US)
(72) Inventor: PERTIERRA, Juan Pablo, San Francisco, California 94103 (US); HOVANKY, Thao D., San Francisco, California 94103 (US); LIPPEY, Barret, San Francisco, California 94103 (US)
(74) Representative: Dolby International AB Patent Group Europe
(86) International application number: PCT/US2023/017134
(87) International publication number: WO 2023/196195

(56) References cited:
- CN-A- 108 845 477
- CN-U- 206 020 829
- US-A1- 2007 035 826
- US-A1- 2009 009 860
- US-A1- 2013 010 356
- US-B2- 9 696 617
- US-B2- 9 921 416
- US-B2- 9 964 844

## Description

### CROSS-REFERENCE TO RELATED APPLICATIONS

This application claims priority from U.S. Provisional application No. 63/362,624, filed 7 April 2022 and EP application 22167096.1, filed 7 April 2022.

### BACKGROUND

### 1. Field of Disclosure

The present disclosure relates generally to the field of image projection, and more specifically to enhancing displayed images on a laser projection screen, wherein techniques disclosed herein are directed to mitigation of speckle artifacts on the projection screen.

### 2. Description of Related Art

Speckle refers to a visual artifact that can be perceived by a viewer as a granular interference pattern. Speckle may occur when a rough surface (e.g., a projection screen) is illuminated by a coherent light (e.g. a laser beam). A speckle pattern observable by the viewer in the image plane of the surface is known as a "subjective speckle pattern." Subjective speckle is an artifact that appears as a static strong noise pattern. It does not necessarily occur on the projection screen itself, but between the screen and the eyes of the observer. Each observer may see a different subjective speckle pattern, although the overall characteristic might be similar. Subjective speckle patterns can and do change and depend on the viewing conditions, such as movement of the observer, size of lens aperture, or position of the imaging system.

While objective speckle that falls on a surface can often be addressed with fixed changes to the optical design, subjective speckle occurs due to interference between the screen surface features and the human eye. As such, changes to the projector optical system are often ineffective, particularly on large screen applications. Subjective speckle is highly objectionable for observers because the pattern creates visual noise and may cause uneven reflectivity across the screen. Subjective speckle thus plagues purveyors of projection and other display systems that utilize laser illumination, due to the coherence of laser light.

### SUMMARY

In one aspect of the present disclosure, a method of mitigating speckle is disclosed. In some embodiments, the method may include generating and transmitting one or more signals to an electromagnetic actuator.

In some variants, the electromagnetic actuator is positioned at a distance from the magnetic material. In some variants, the magnetic particles are affixed in a stretchable binder agent and disposed on the projection screen. In some variants, the electromagnetic actuator generates magnetic fields in response to the transmitted one or more signals. In some variants, the generated magnetic fields interact with the magnetic material to move the projection screen for at least partly mitigating a visual perceptibility of the speckle.

In another aspect of the present disclosure, a method of obtaining a projection screen that can be shaken by a non-contact magnetic driver to at least partially mitigate visual perceptibility of speckle is disclosed. In some embodiments, the method may include applying magnetic material to at least portions of the projection screen.

In some variants, the applying of the magnetic material includes at least one of: coating the at least portions of the projection screen with a stretchable binder agent, wherein magnetic particles are affixed in the binder agent; affixing one or more sheets of the magnetic material in rolled form having a thickness of less than 0.1 mm; depositing magnetic particles substantially uniformly across the projection screen; or spatially positioning magnetic particles at a first non-zero density at a first portion of the projection screen and at a second non-zero density at a second portion of the projection screen, the second density different from the first density.

In another aspect of the present disclosure, a system for projection screen shaking is disclosed. In some embodiments, the system may include a projection screen including magnetic material affixed in a stretchable binder; at least one electromagnetic actuator disposed at a distance from the screen and configured to vibrate the projection screen via magnetic fields; and a controller configured for signal communication with the at least one electromagnetic actuator, the controller configured to: generate and transmit one or more signals to the at least one electromagnetic actuator to cause generation of the magnetic fields by the at least one electromagnetic actuator, wherein the generated magnetic fields interact with the magnetic material to cause the projection screen to vibrate.

In another aspect of the present disclosure, a projection screen is disclosed. In some embodiments, the projection screen may include: magnetic particles disposed on the projection screen in a spatial pattern, wherein the magnetic particles are suspended in a stretchable binder and affixed to at least portions of the projection screen, or coated onto the at least portions of the projection screen.

### BRIEF DESCRIPTION OF THE DRAWINGS

FIG. 1 is a simplified diagram of an electromagnetic actuator useful for generating a magnetic field and thereby influencing nearby magnetic objects, according to some embodiments.
FIGS. 2A - 2E are illustrations of different variations of patterns of magnetic material disposed on a projection screen.
FIG. 3 is a diagram of an electromagnetic actuator in a horseshoe configuration, positioned with respect to areas of magnetic particles, according to some embodiments.
FIG. 4 is a diagram of a configuration of non-contact electromagnetic actuators positioned stationary relative to a screen.
FIG. 5 illustrates a cross-sectional diagram of a projection screen configured to shake in a direction orthogonal to the plane of the screen, according to some embodiments.
FIG. 6 illustrates a diagram of a configuration of a screen positioned relative to current-carrying circuits, useful for implementing a projection screen apparatus such as a projection screen apparatus shown in FIGS. 5 or 7.
FIG. 7 illustrates a cross-sectional diagram of a projection screen apparatus configured to shake in a direction lateral to the plane or surface of the screen, according to some embodiments.
FIG. 8 is a flow diagram illustrating a method for mitigating speckle, according to some embodiments.
FIG. 9 is a flow diagram illustrating a method for obtaining a projection screen configured to enable speckle mitigation, according to some embodiments.
FIG. 10 is a block diagram that shows examples of components of an apparatus capable of implementing various aspects of this disclosure.

### NOTATION AND NOMENCLATURE

Throughout this disclosure including in the claims, the expression "system" is used in a broad sense to denote a device, system, or subsystem.

Throughout this disclosure including in the claims, the term "processor" is used in a broad sense to denote a system or device programmable or otherwise configurable (e.g., with software or firmware) to perform operations on data (e.g., audio, or video or other image data). Examples of processors include a field-programmable gate array (or other configurable integrated circuit or chip set), a digital signal processor programmed and/or otherwise configured to perform pipelined processing on audio or other sound data, a programmable general purpose processor or computer, and a programmable microprocessor chip or chip set.

Throughout this disclosure including in the claims, the term "couples" or "coupled" (including "electrically coupled") is used to mean either a direct or indirect connection. Thus, if a first device couples to a second device, that connection may be through a direct connection, or through an indirect connection via other devices and connections.

### DETAILED DESCRIPTION OF EMBODIMENTS

There have been efforts to mitigate subjective speckle. One approach is to use lower-gain screens, as the manufacturing techniques used for higher-gain screens also increase subjective speckle. However, this is often not a practical solution because the power and cost of the laser system increases as the screen gain decreases, and many applications require high gain screens.

A potentially less costly solution is screen shaking or screen vibration. Screen shaking changes the shape and location of the surface features over time, which in turn changes the spatial phase relationship, and thus the speckle pattern over time. This makes the speckle noise pattern change temporally as observed by a stationary observer, which reduces its overall visibility.

Shaking or vibrating a screen (such as a projection screen) to reduce artifacts can be achieved in different ways, including via physical, acoustic, or electromagnetic means. For instance, applying energy to electromagnetic actuators can cause the actuators to move in prescribed directions and cause the at least portions of the screen to move (e.g., vibrate) accordingly. However, if care is not taken, the physical components used to shake or vibrate the screen may create their own visible artifacts on the screen, such as visible indentations.
US 9,921,416 B2 discloses a system for mitigating speckle by vibrating a projection screen using at least one electromagnetic actuator disposed at a distance from the screen, the actuator being controlled to generate magnetic fields that interact with magnetic material associated with the screen.

Embodiments of the present disclosure use arrangements of magnetic materials, which can be arranged to reduce or eliminate any visible indentations on a screen.

Many embodiments of the present disclosure are technologically possible to implement to achieve the foregoing solutions given the following descriptions. It will be apparent to those of ordinary skill in the art from the present disclosure how to implement them.

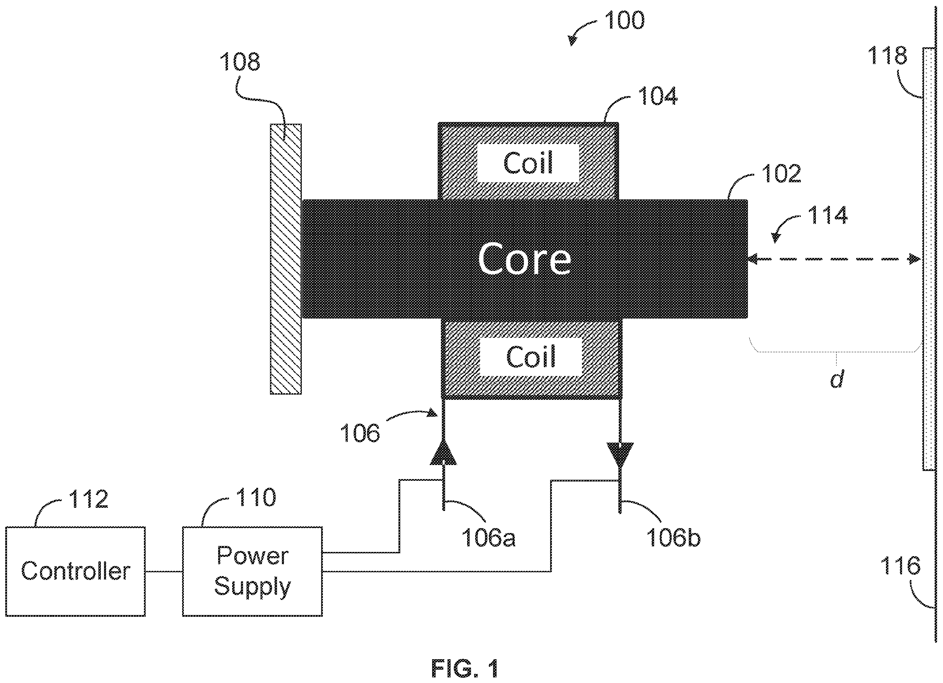

FIG. 1 is a simplified diagram of an electromagnetic actuator 100 useful for generating a magnetic field and thereby influencing nearby magnetic objects, according to some embodiments. The electromagnetic actuator 100 may include a core 102 with coil 104 wrapped around the core. For example, the core 102 may be a bar-shaped magnetic material, and a winding 106 may be wound about the core 102. The magnetic material may be a material that has magnetic properties similar to those of, e.g., iron, and can become permanently magnetized. The core 108 may be fixed to a structure 108, e.g., a wall, a platform, a portion of a larger actuating system. In some cases, such a structure may be affixed to another structure and/or stationary or movable with the core 102. In some variants, the core may be in other shapes or configurations, such as rectangular or toroidal (with a gap), or "horseshoe" configuration (with parallel and/or non-parallel side portions).

In some implementations, a power supply 110 may send an electrical current through the coil 104, thereby creating a magnetic field that can cause other magnetic elements to be repelled or attracted (from a distance d) depending on the direction of the electrical current. That is to say, a magnetic field having a first direction may be generated when the current through the coil 104 is traveling from path 106a to 106b, and a magnetic field having a second direction opposite to the first direction may be generated when the current through the coil 104 is traveling from path 106b to 106a. The core 102 may be influenced by the magnetic field and produce an induced magnetic field that possesses directional electromotive force (e.g., magnetic force 114) per at least Faraday's law of electromagnetic induction. Hence, magnetic forces 114 can be generated to influence an object (e.g., a screen 116) across a distance d depending on the direction of current. FIG. 1 shows an example of current flow in the first direction. The amount, frequency, and duration of the current produced by the power supply 110 may be driven or controlled by one or more signals generated by and transmitted from a controller 112.

In some embodiments, the power supply 110 may be part of the electromagnetic actuator 100 (e.g., placed in the same chassis or structure as the actuator). In some embodiments, the power supply 110 may be external to the electromagnetic actuator 100. In some embodiments, the controller 112 may be part of the electromagnetic actuator 100 or external to the electromagnetic actuator 100. In some cases, the electromagnetic actuator 100 may include an interface, a processor, and/or memory electrically coupled to the core 102 and/or the coils 104 to receive signals from at least the controller 112 and operate according to the signals.

The present disclosure describes non-contact screen shaking method and apparatus that reduces or eliminates visible indentations on the screen. More specifically, the present disclosure describes an electromagnetic actuator operable without making any contact with a screen coated with a magnetic material 118 that avoids adding a large mass to the screen. In some embodiments, an air gap or dielectric material exists between such an electromagnetic actuator 100 and the screen 116, which enables direct physical contact to be avoided between the actuator and the screen.

In some embodiments, the magnetic material may include a ferromagnetic material. A ferromagnetic material has a large, positive susceptibility to an external magnetic field, and inherently possesses substantially parallel magnetic alignment of neighboring atoms. It can retain magnetic properties after the external field has been removed. Examples of ferromagnetic materials include iron, nickel, and cobalt. Other examples include gadolinium, neodymium, and alnico, an aluminum-nickel-cobalt alloy. Another example of a ferromagnetic material includes a ferromagnetic ceramic such as one made from iron oxide and another metal (e.g., nickel, zinc).

In some implementations, the ferromagnetic material may be iron powder. In some cases, the iron powder may be particles having a diameter of approximately 1 - 100 µm. In some cases, iron powder may be fixed in a coating material. In some cases, the coating could be uniform across at least portions of the screen or placed in a periodic (uniformly repeating) pattern, such that actuators can be placed anywhere behind the screen. In some implementations, the ferromagnetic material may be in iron oxide form.

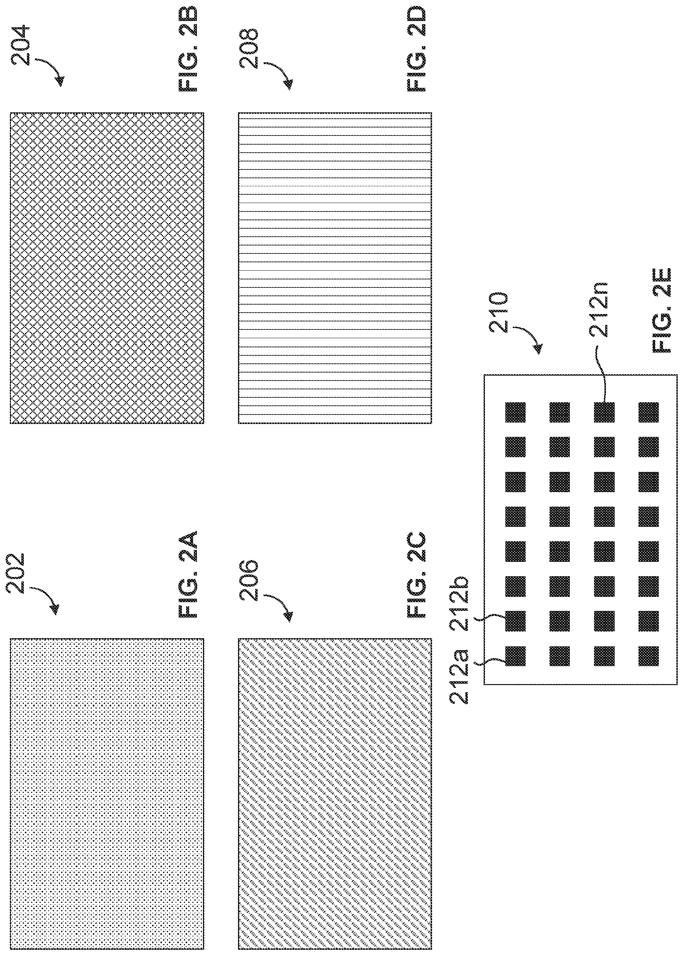

Examples of such patterns are shown in FIGS. 2A - 2D. According to various embodiments, the ferromagnetic material may be coated on at least a portion of a screen in different patterns, such as example patterns 202, 204, 206 or 208. Example pattern 202 illustrates magnetic material applied across the entire screen, such as via a coating. Example pattern 204 illustrates magnetic material applied in a crisscross manner with gaps between the diagonal lines. Despite the lightweight nature of powder, the screen does not need to be covered in its entirety. Similarly, example patterns 206 and 208 show coating applied in diagonal lines and vertical lines, respectively.

In some cases, the coating could be localized to pre-determined locations where the actuators will be placed. An example of such a pattern 210 is shown in FIG. 2E, where the coating may be applied to locations 212a, 212b ... 212n where actuators will be placed proximate to the screen. Such locations may be uniformly placed or non-uniformly placed, depending on the location of the actuators. In some cases, the coating is applied to one surface of the screen, the surface being opposite to a projection surface of the screen.

An advantage of these configurations is that the density of the deposition of the ferromagnetic material is altered spatially, such that the effective shape and force of the actuator can be customized to an extent that can be controlled (e.g., using a desired number of actuators and a desired amount of force at a desired frequency) to maximize speckle reduction and reduce any visibility of the displacement.

In some embodiments, the magnetic material may include a diamagnetic material. A diamagnetic material has a weak, negative susceptibility to magnetic fields. It has weak or no inherent magnetic alignment but can be induced to have an opposing magnetic field. It does not retain the magnetic properties when the external field is removed. Examples of diamagnetic materials include copper, silver, gold, mercury, and bismuth. In some embodiments, the diamagnetic material can be in powder form similar to the ferromagnetic material (e.g., iron oxide, iron powder) described above and coated across at least portions of the screen as illustrated in FIGS. 2A - 2E.

In some embodiments, ferromagnetic and diamagnetic material may be used in conjunction with each other. For example, the magnetic particles may be a mix of ferromagnetic and diamagnetic. As another example, ferromagnetic material may be deposited on one area of the screen, and diamagnetic material may be deposited on another area of the screen.

Those having ordinary skill in the relevant art will recognize that any of the aforementioned example materials or other suitable materials can be used as the ferromagnetic, diamagnetic, or other material with magnetic properties (e.g., ferrimagnetic, paramagnetic, or superparamagnetic (e.g., nanoparticle) materials) to effectuate the desired vibration and displacement of the screen.

The magnetic coating may be applied to a projection screen before mounting of the screen onto other scaffolding. Hence, in some embodiments, the magnetic coating is stretchable so as to allow the projection screen can be stretched during mounting, e.g., to remove wrinkles (e.g., the magnetic coating is sufficiently stretchable so as to allow the projection screen to be stretched during mounting). In some embodiments, the magnetic coating may be a relatively solid substrate material or applied onto such substrate, e.g., a thin slab (e.g., approximately 1 mm or less in thickness) or tape.

In some implementations, to accomplish the above, magnetic particles (e.g., iron powder) are suspended in a stretchable binder or adhesive, and/or coated on a stretchable projection screen in a way that maintains the stretch capability of the underlying screen material. In some cases, the stretchable binder may be made of vinyl or other plastics (e.g., polyethylene terephthalate (PET), thermoplastics), In some cases, the particles, e.g. ferritic particles, may be embedded in a binder agent, e.g., alkyd. In other cases, other types of resins for magnetic coating may be used. The thickness of this coating may varies depending on design requirements. In some variants, the thickness of the coating may range from 10 to 20 µm. In some embodiments, the magnetic coating may be painted, varnished, smeared, or sprayed (e.g., as droplets) onto the projection screen. In some embodiments, the magnetic coating may be placed onto a substrate (e.g., tape) that can be adhered, affixed or otherwise applied to the projection screen. As used herein, "stretchable" may refer to structures having an elastic modulus of less than 300 megapascals (MPa), of less than 200 MPa, of less than 100 MPa, or in the range of 30 to 100 MPa or in the range of 30 to 300 MPa, as examples.

In some embodiments, the magnetic material may be a solid ferromagnetic (or diamagnetic or other materials having magnetic properties) sheet in rolled form, e.g., a thin foil that has a thickness of less than, e.g., 0.1 mm, 0.2 mm, 0.3 mm, or 0.5 mm. Such contiguous material may also advantageously provide magnetic properties to the screen in a manner that results in little to no visible indentations.

Since large projection screens tend to move with air currents and may change position or form depending on other factors such as temperature changes, the gap between the screen and magnetic actuator(s) takes this into account in various embodiments. In some embodiments, the magnetic fields lines are made uniform enough such that they can cover the entire distance that the screen can move without significant change in field strength.

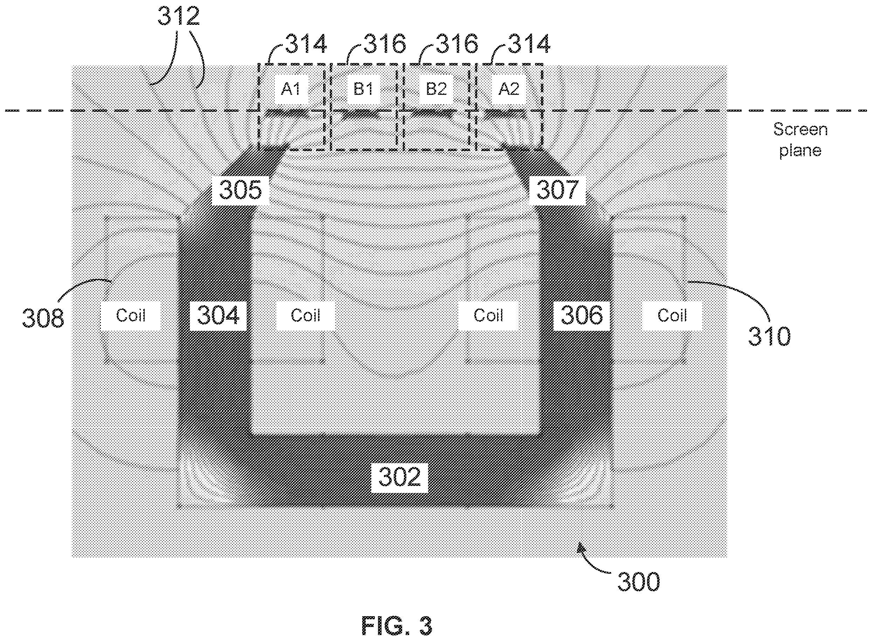

FIG. 3 is a simplified diagram of an electromagnetic actuator 300 in a horseshoe configuration, positioned with respect to areas of magnetic particles, according to some embodiments. In some embodiments, the electromagnetic actuator 300 may include multiple (e.g., at least three) core portions 302, 304, 306 defined based on corners between the core portions (e.g., the corner between core portions 302 and 304). In some embodiments, the electromagnetic actuator 300 may include curved core portions without corners.

In some embodiments, at least some of the core portions may have coils wound about them. For example, FIG. 3 shows coils 308 wrapped around core portion 304, and coil 310 wrapped around core portion 306. In some implementations, core portion 304 may extend to core portion 305, and core portion 306 may extend to core portion 307. In some cases, the core portions 305 and 307 may be at a different angle than the core portions 304 and 306. As discussed above, the coils 308 and 310 may carry electrical current, causing magnetic fields to be generated around the electromagnetic actuator 300, indicated by magnetic field lines 312.

FIG. 3 further illustrates an example configuration of ferromagnetic material disposed on the screen, along a plane of the screen, simplified with four magnetic elements located at positions A1, B1, B2, A2. In some embodiments, each of the magnetic elements is a coating of ferromagnetic material (e.g., iron powder suspended in a binder agent), or a strip or tape or other type of substrate having the coating applied thereto. In some embodiments, these magnetic elements may be disposed as vertical lines (e.g., the example pattern 208 of FIG. 2D where each line is a magnetic element), or locations corresponding to actuator positioning (e.g., the example pattern 210 of FIG. 2E).

In some embodiments, there may be a lower or higher number than four magnetic elements (e.g., 2, 10, 64, 100, 600, or beyond). In some embodiments, the screen may have magnetic coating disposed evenly applied across the screen or a portion thereof. In some embodiments, the magnetic elements are representations of areas of a screen that has a magnetic coating applied across at least a portion of the screen.

In the example configuration shown in FIG. 3, the magnetic materials in areas 314 corresponding to positions A1 and A2 closest to the core (e.g., closest to core portions 305 and 307) may experience a greater electromotive force than the magnetic materials in areas 316 corresponding to positions B1 and B2, which are farther away from the core. This configuration may thus create a curved profile to the actuation on the screen. Notably, the electromagnetic actuator 300 remains at a distance, e.g., a prescribed distance that allows for magnetic interaction with the screen but without physical contact with the screen.

In various implementations, the geometry of the actuator can be adjusted to create a different profile. However, the density of the magnetic materials (e.g., density of magnetic particles) is also adjusted to control the spatial profile of the actuation on the screen. For example, in some configurations, magnetic materials may only be present in positions A1 and A2 of the screen, as positions B1 and B2 are not affected as strongly by the magnetic field. In some other configurations, the density of particles in positions B1 and B2 may be greater than the density of particles in positions A1 and A2 such that the screen experiences a generally evenly applied electromotive force.

Myriad similar configurations of magnetic materials and portions of actuator(s) may be possible as desired. For example, positions A1, B1, B2 and A2 may be arranged horizontally or vertically (or diagonally at an angle in between). As another example, the ends of the "horseshoe" may be positioned azimuthally or altitudinally (or at an orientation in between).

In some embodiments, a controller (not shown) may provide actuation signals to the electromagnetic actuator 300. The actuation signals may be simple waveforms (sinusoidal, triangle, square, etc.) to complex or pseudo-random waveforms. In some cases, these control signals may be synchronous or asynchronous with other actuators affecting the screen.

In some embodiments, the controller may provide actuation signals that cause a power supply (not shown) to generate electrical currents at prescribed parameters. In some implementations, the controller (e.g., via actuation signals) may cause the power supply to generate currents for a series of actuators timed such that the actuators operate at one or more prescribed frequencies. For example, the actuators may operate at two frequencies, e.g., 32 Hz and 35 Hz. The two frequencies may be slightly off set between columns of actuators in order to avoid standing waves. In some cases, actuators may be arranged such that the adjacent unit differs by 3 to 4 Hz, e.g., 32 Hz and 35 Hz, or 32 Hz and 36 Hz. In some implementations, the frequency may range from 30 Hz and up, e.g., to 36 Hz. Hence, the screen may vibrate at different frequencies at different locations (e.g., one side vibrates at 32 Hz, and another side vibrates at 35 Hz). The frequency may be selected between 30 - 36 Hz based on undesirable audibility or the perceptibility of noise from movement of the screen. However, in other implementations, the frequency may be outside the range of 30 - 36 Hz. For example, frequencies between the range of of 25 - 100 Hz may be used.

In some implementations, actuation signals may cause currents to be sent that generate a prescribed magnitude of vibration or displacement of the screen via the magnetic force generated by the actuator(s). This is based on the electromotive force generated by an electromagnetic actuator being proportional to the amount of current provided to it. In some embodiments, the displacement may be sufficient (e.g., movement of 1 mm) to remove the speckle from a viewer's perception; however, excessive movement (e.g., above 10 mm) can be perceptible and/or noisy, and thus distracting to the viewer. Moreover, causing excessive movement may involve impractical levels of energy or power. In some implementations, actuation signals may cause currents to be sent that cause the screen to vibrate in a particular direction, e.g., left to right, up to down, diagonal, or reverse directions thereof, or combinations thereof. That is, the motion of the screen may be an oscillating motion at a particular frequency (e.g., 30-36 Hz) and/or at a particular displacement (e.g., 1 mm). In some implementations, the density of magnetic materials deposited onto the screen may also affect the pattern of motion of the screen.

Advantageously, the vibration or shaking of the screen at the prescribed frequency and/or displacement can accordingly reduce speckle or other interference artifacts from being perceived by viewers of the screen.

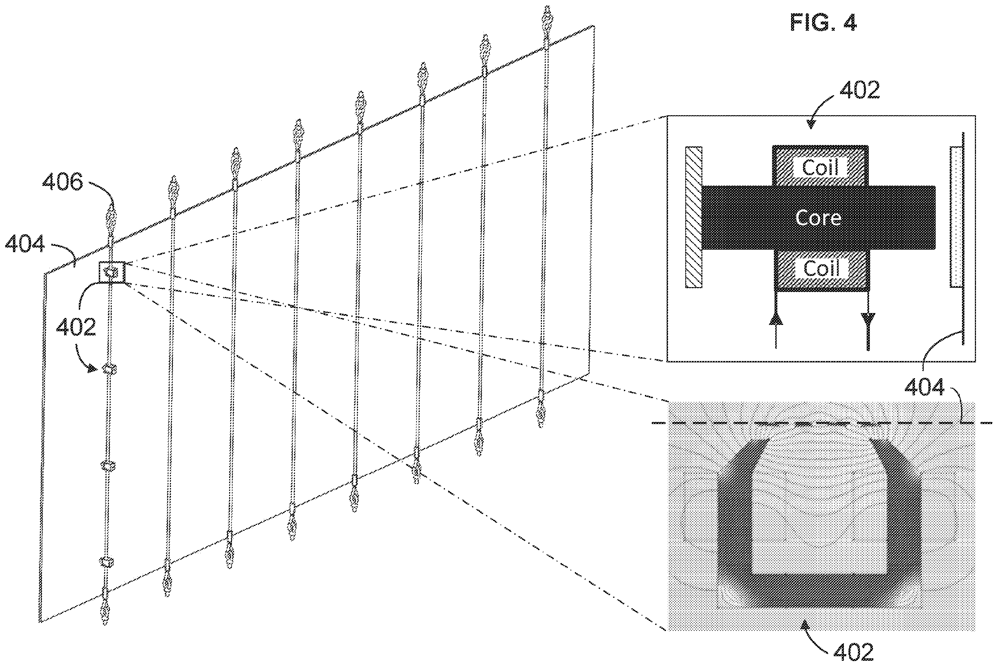

FIG. 4 illustrates a configuration of non-contact electromagnetic actuators 402 positioned stationary relative to a screen 404. In some embodiments, one or more cables 406 are held in tension. Each cable 406 may have an electromagnetic actuator 402 attached to it. The cables 406 may be positioned away from the screen 404 such that the electromagnetic actuator 402 does not make contact with the screen. In some embodiments, the electromagnetic actuator 402 may be an example of the electromagnetic actuator 100 as shown in FIG. 1 or the electromagnetic actuator 300 as shown in FIG. 3. The screen 404 may be an example of the screen 116 of FIG. 1 or any of the screens 202 - 210 as shown in FIG. 2A - 2E. According to various implementations, the screen 404 may have magnetic material applied or affixed to the screen in forms as discussed above such as a coating (e.g., ferritic particles embedded in a binder agent such as alkyd), a strip or tape having such coating, or a rolled sheet (e.g., foil).

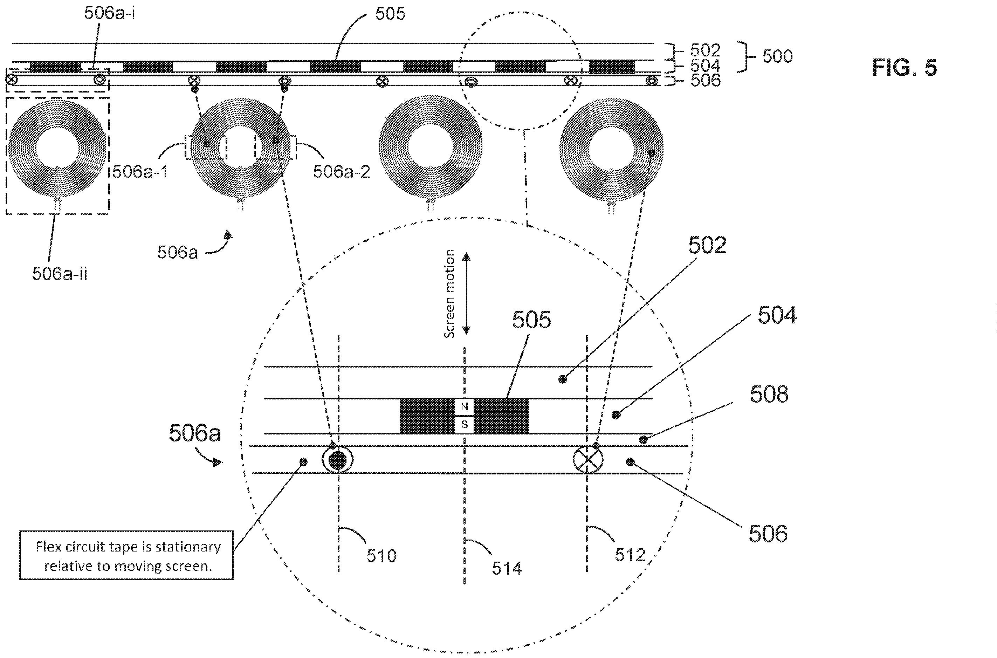

FIG. 5 illustrates a cross-sectional diagram of a projection screen apparatus 500 configured to shake in a direction orthogonal to the plane or surface of the screen, according to some embodiments. In some embodiments, the projection screen apparatus 500 may include (i) a screen 502 impregnated, embedded, or covered with magnetic material (e.g., coated with ferromagnetic material such as iron powder embedded in a binder agent or on a substrate, or a rolled metallic sheet) and/or (ii) a layer 504 having one or more magnetic elements 505 (e.g., thin, rubber permanent magnet strips). In some implementations, the layer 504 may be optional. In some implementations, the screen 502 may be held captive by the permanent magnets, which may in turn be held stationary by other scaffolding such as cables, poles, stands, or walls.

In some embodiments, the permanent magnet strips 505 of layer 504 may have a prescribed maximum energy product (BHₘₐₓ, in units of megagauss-oersted (MG-Oe)) and/or a prescribed magnetic flux density associated with it (for example, 60 mT (in units of milliteslas)). In some embodiments, the permanent magnet strips 505 may have a relatively low thickness, e.g., 0.5 mm. In some implementations, the layer 504 may be in the same color as the screen 502, e.g., white so as to allow light permeability.

The projection screen apparatus 500 may be configured to magnetically interact with a layer 506 having one or more current-carrying circuit elements 506a. In some embodiments, a current-carrying circuit element 506a may be an electromagnetic actuator. In some cases, the current-carrying circuit element 506a may be in a circular shape (the example illustrated), but it could also be in a square or rectangular shape, or other shapes. In some cases, there may be a single or multiple current-carrying circuit elements 506a in the layer 506. In some embodiments, the layer 506 (including one or more current-carrying circuit element 506a) may be an electromagnetic actuator. In some implementations, a current-carrying circuit element may include coils, traces, or other conductive wire(s) embedded in a flexible circuit material. For example, the layer 506 is made of or includes flexible strips or layers that sandwich the current-carrying circuit element 506a. In some cases, there may be more than one flexible strip or layer. In some cases, the current-carrying circuit elements 506a may be powered by a power source (not shown) via the wall, cable, or other scaffolding. The power source may be controlled by a controller (not shown). In some implementations, the layer 506 may be affixed or otherwise held stationary (e.g., to a wall, cable, pole, stand, or other scaffolding), separate from and substantially parallel to the screen 502, and the current-carrying circuit elements 506a may not be attached directly to the screen 502.

To that end, in some embodiments, a gap 508 separating layer 504 and layer 506 may be present. In some implementations, the gap 508 may include an air gap, a low-hardness material (e.g., gel, rubber, plastic having a low hardness (durometer)), a dielectric material, or another dampening medium between layers 504, 506. Such gap 508 prevents contact between the projection screen apparatus 500 and the layer 506 with current-carrying circuit elements 506a, allowing only magnetic influence to cause motion of the screen 502.

In some embodiments, one or more current-carrying circuit elements 506a may be disposed in a plane substantially parallel to a plane of the projection screen apparatus 500 (including a plane of, e.g., the screen 502 or the layer 504 of magnetic elements). The current-carrying circuit element 506a is illustrated in two ways: (i) a cross-sectional view 506a-i as part of layer 506, with inbound current flow "x" (current perpendicularly going into the plane of the page) and outbound current flow "o" (current perpendicularly coming out of the plane of the page), and (ii) a frontal view 506a-ii. That is, inbound portion 506a-1 of the current-carrying circuit element 506a from the frontal view may correspond to the inbound "x" of the cross-sectional view, and outbound portion 506a-2 of the current-carrying circuit element 506a from the frontal view may correspond to the outbound "o" of the cross-sectional view. The cross-sectional view 506a-i thus illustrates opposing directions of current flow.

In some embodiments, (i) an axis 510 may be associated with the inbound portion 506a-1, (ii) an axis 512 may be associated with the outbound portion 506a-2, and (iii) an axis 514 may be associated (e.g., through the center of the magnetic element) with a magnetic element 505 (e.g., a permanent magnet strip with a prescribed magnetic polarity or orientation) disposed proximate to the current-carrying circuit element 506a. Each of these axes 510, 512, 514 may be substantially parallel to one another.

In some embodiments, the axes 510, 512 associated with the inbound and outbound portions of the current-carrying circuit 506a may be offset from the axis 514 associated with the magnetic element 505, meaning, while the axes are parallel, they may not overlap.

In some embodiments, the current in the current-carrying circuits 506a may be controlled or varied to modulate the net force applied to the screen 502. In such embodiments, the flow of current through the current-carrying circuits 506a may generate magnetic fields that cause the screen 502 to move orthogonal to the plane of the screen 502. Since the traces of the current-carrying circuits 506a are offset from the screen 502 and the permanent magnet strips 505, the generated magnetic fields can induce the screen 502 and/or the permanent magnet strips 505 to repel or attract toward the current-carrying circuits 506a. In some embodiments, the permanent magnetic strip 505 provides a permanent magnetic field B that interacts with the electrical current applied to coils of current-carrying circuits 506a. More directly, the configuration of the current-carrying circuits 506a and magnetic field created by permanent magnetic strip 505 are an adaptation of Ampere's and Faraday's laws. According to Ampere's circuital law, for any closed loop path, the product of (i) the sum of the active length elements of a conductor and (ii) the magnetic field in the direction of the length element is equal to the product of the permeability and the electric current generated in the closed loop. When the oscillating magnetic field is created by the current-carrying conductors is placed under a magnetic field, an electromotive force is produced (according to Faraday's law mentioned elsewhere herein) resulting in the vibratory movement of the screen 502.

In some embodiments, the strength of the permanent magnet strips 505 and the number of turns on the coil of the current-carrying circuits 506a may depend on the size of the screen 502 and its inertia. For instance, the larger the screen, the stronger or more numerous the permanent magnets used, amount of current, or the number of turns on the coil may be. In some embodiments, the presence of the magnetic elements 505 may amplify the effects of magnetic flux generated by the current-carrying circuit elements 506a, e.g., by causing stronger electromotive force to be applied to the screen 502, enabling greater or more controlled magnetically induced motion. Current through the current-carrying circuits 506a may be alternating in direction based on actuation signals from a controller so as to cause a shaking or vibration in said orthogonal direction in a desired pattern, frequency, duration, and/or magnitude (amount of displacement). The shaking or vibration arising from these characteristics can accordingly reduce speckle or other interference artifacts from being perceived by viewers of the screen.

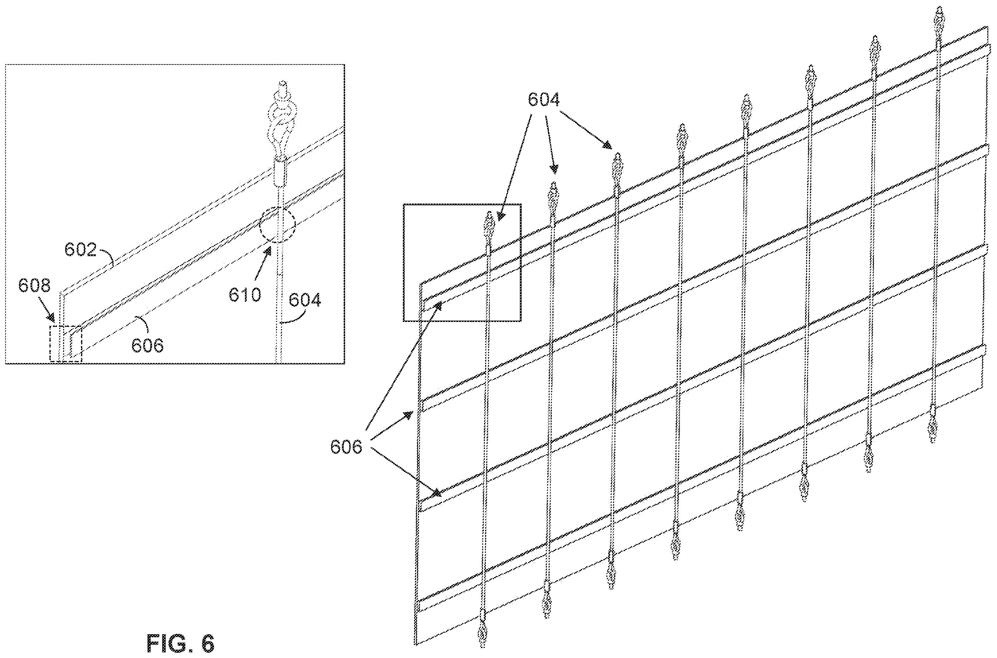

FIG. 6 illustrates a configuration of a screen 602 positioned relative to current-carrying circuits, useful for implementing a projection screen apparatus such as projection screen apparatus 500 or 700. In some embodiments, the screen 602 may be an example of the screen 502 of FIG. 5, and may have magnetic material (iron powder coating, tape, etc. as discussed elsewhere herein) applied thereto. In some implementations, the screen 602 may include additional magnetic elements, e.g., permanent magnet strips 505. In some embodiments, the current-carrying circuits may be an example of current-carrying circuit elements 506a, and may be embedded in flexible circuit material (e.g., one or more strips 606). In some embodiments, an air gap 608 may be present between the screen 602 and the strip 606. In some embodiments, however, other dampening media may be placed at least in part between the screen 602 and the strip 606. In some embodiments, the strips 606 may be affixed to one or more cables 604, which may be held stationary at location 610 via, e.g., tension (or other attachment means, e.g., to floor and ceiling, or to wall or other scaffolding). Hence, the strips 606 may be supported (or restrained) by the cables 604, and held stationary relative to the screen 602.

In some embodiments, current-carrying circuit elements embedded in the strips may be electrically connected to one another, to a power supply (not shown), and/or to a controller (not shown). In some implementations, the connections may be effectuated by connections, e.g., wires, that are passed through or along the cables 604 or other scaffolding.

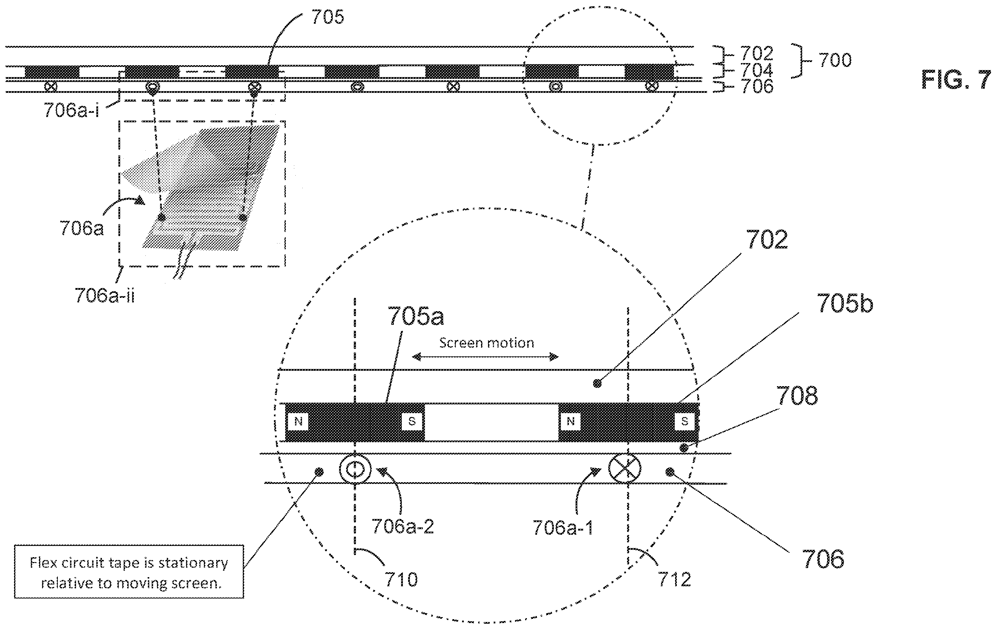

When current (e.g., alternating in prescribed frequencies and durations) is driven through one or more of the strips 606 having current-carrying circuit elements therein, the screen 602 may move with respect to the strips, e.g., shake or vibrate orthogonally (per the embodiments described with respect to, e.g., FIG. 5) or laterally (per the embodiments described with respect to, e.g., FIG. 7 described below) to the strips.

FIG. 7 illustrates a cross-sectional diagram of a projection screen apparatus 700 configured to shake in a direction lateral to the plane or surface of the screen, according to some embodiments. In some embodiments, the projection screen apparatus 700 may include a screen 702 impregnated, embedded, or covered with magnetic material (e.g., coated with ferromagnetic material such as iron powder embedded in a binder agent or on a substrate, or a rolled metallic sheet) and/or (ii) a layer 704 having one or more magnetic elements 705 (e.g., thin, rubber permanent magnet strips). In some implementations, the screen 702 may be held captive by the permanent magnets, which may in turn be held stationary by other scaffolding such as cables, poles, stands, or walls.

In some embodiments, the permanent magnet strips 705 of layer 704 may have a prescribed maximum energy product (BHₘₐₓ, in units of megagauss-oersted (MG-Oe)) and/or a prescribed magnetic flux density associated with it (for example, 60 mT). In some embodiments, the permanent magnet strips 505 may have a relatively low thickness, e.g., 0.5 mm. In some implementations, the layer 704 may be in the same color as the screen 702, e.g., white so as to allow light permeability.

The projection screen apparatus 700 may be configured to magnetically interact with a layer 706 having one or more current-carrying circuit elements 706a. In some embodiments, a current-carrying circuit element 706a may be an electromagnetic actuator. In some embodiments, the layer 706 (including one or more current-carrying circuit element 706a) may be an electromagnetic actuator. In some implementations, a current-carrying circuit element may include a flat coil, traces on a substrate, or other conductive wire(s) embedded in a flexible circuit material. For example, the layer 706 is made of or includes flexible strips or layers that sandwich the current-carrying circuit element 706a. In some cases, there may be more than one flexible strip or layer. In some cases, the current-carrying circuit elements 706a may be powered by a power source (not shown) via the wall, cable, or other scaffolding. The power source may be controlled by a controller (not shown). In some implementations, the layer 706 may be affixed or otherwise held stationary (e.g., to a wall, cable, pole, stand, or other scaffolding), separate from and substantially parallel to the screen 702, and the current-carrying circuit elements 706a may not be attached directly to the screen 702. To that end, in some embodiments, a gap 708 separating layer 704 and layer 706 may be present. The gap 708 may be an example of the gap 508 of FIG. 5.

In some embodiments, one or more current-carrying circuit elements 706a may be disposed in a plane substantially parallel to a plane of the projection screen apparatus 700 (including a plane of, e.g., the screen 702 or the layer 704 of magnetic elements). The current-carrying circuit element 706a is illustrated in a cross-sectional view 706a-i (with inward and outward directions of current) and an isometric view 706a-ii. Similar to the cross-sectional view 506a-i of FIG. 5, opposing directions of current flow are shown by inbound portion 706a-1 and outbound portion 706-2. In some embodiments, at least a portion of the current-carrying circuit element 706a may include a trace pattern in which current flows are arranged in alternating fashion, spaced apart in widths of, e.g., 6 mm to 25 mm.

In some embodiments, (i) an axis 710 may be associated with outbound portion 706a-2 and magnetic element 505a (e.g., a permanent magnet strip with a magnetic polarity or orientation), and (ii) an axis 712 may be associated with outbound portion 706a-1 and magnetic element 505b (e.g., another permanent magnet strip with the same magnetic polarity or orientation). Axes 710, 712 may be substantially parallel to each other. That is, each of the axes 710, 712 (associated with the inbound and outbound portions of the current-carrying circuit 706a) may be aligned with its respective current-carrying circuit 706a and magnetic element (e.g., permanent magnet strip 705a or 705b), resulting in alignment of magnetic polarity. Put another way, current driven through the current-carrying circuit 706a may be "in phase" with the one or more magnetic elements. When alternating current is applied to the coil of the current-carrying circuit 706a, electromotive force may result in vibratory displacement of the screen 702.

In some embodiments, the current in the current-carrying circuits 706a may be controlled or varied to modulate the net force applied to the screen 702. In such embodiments, the flow of current through the current-carrying circuits 706a may generate magnetic fields that cause the screen 702 to move laterally with respect to the plane of the screen 702. Since the traces of the current-carrying circuits 706a are aligned with the permanent magnet strips 705, the generated magnetic fields can induce the screen 702 and/or the permanent magnet strips 705 to move sideways. The strength of the permanent magnet strips 705 and the number of turns on the coil of the current-carrying circuits 706a may depend on the size of the screen 702 and its inertia. For instance, the larger the screen, the stronger or more numerous the permanent magnets used, amount of current, or the number of turns on the coil may be. In some embodiments, the presence of the magnetic elements 705 may amplify the effects of magnetic flux generated by the current-carrying circuit elements 706a, e.g., by causing stronger electromotive force to be applied to the screen 702, enabling greater or more controlled magnetically induced motion. Current through the current-carrying circuits 706a may be alternating in direction based on actuation signals from a controller so as to cause an in-plane shaking or vibration in said lateral direction in a desired pattern, frequency, duration, and/or magnitude (amount of displacement). The shaking or vibration arising from these characteristics can accordingly reduce speckle or other interference artifacts from being perceived by viewers of the screen.

### Methods

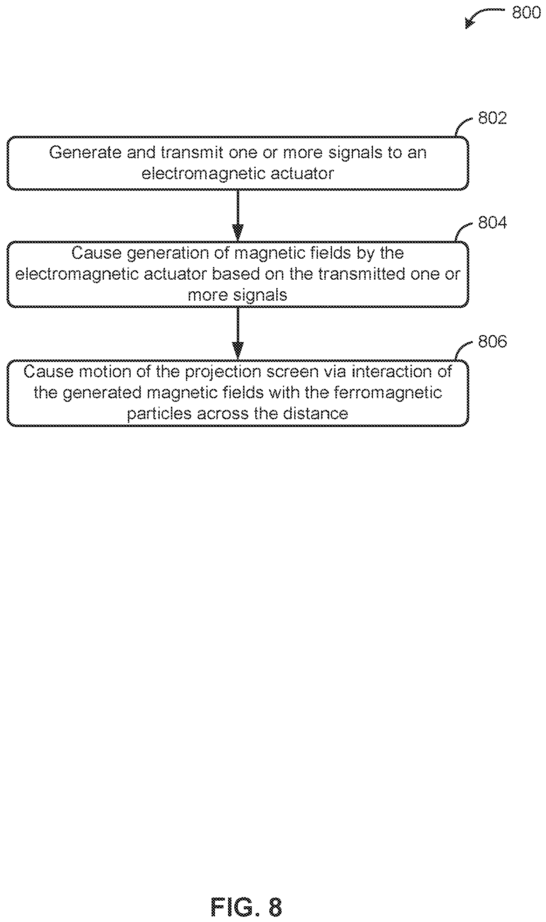

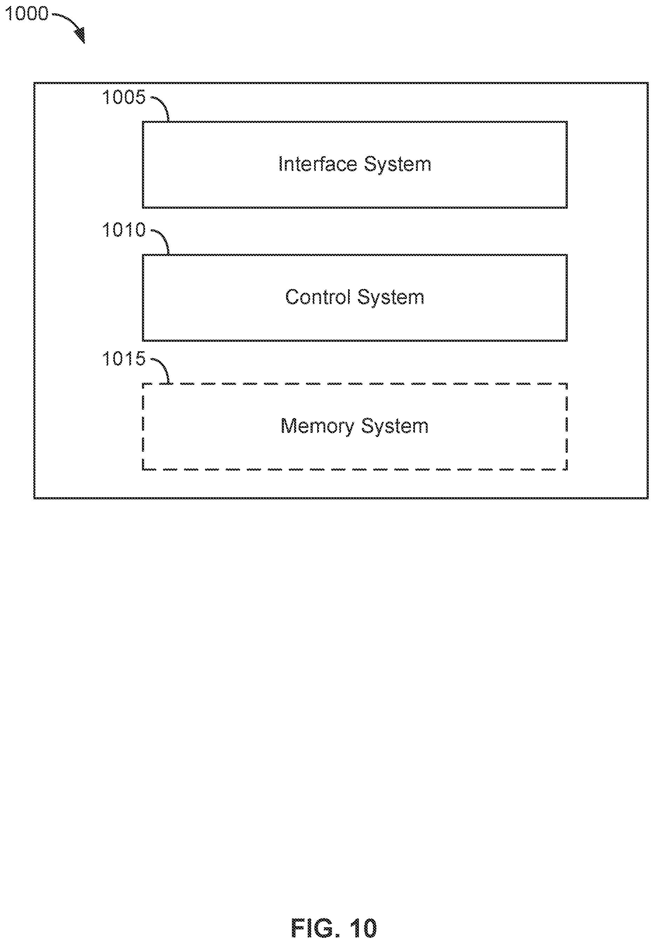

FIG. 8 is a flow diagram illustrating a method 800 for mitigating speckle, according to some embodiments. One or more of the functions of the method 800 may be performed by a computerized apparatus or system. Means for performing the functionality illustrated in one or more of the steps shown in FIG. 8 may include hardware and/or software components of such computerized apparatus or system, such as, for example, a device, a computer system, or a computer-readable apparatus including a storage medium storing computer-readable and/or computer-executable instructions that are configured to, when executed by a processor apparatus, cause the at least one processor apparatus or another apparatus to perform the operations. Example components of a computerized apparatus or system are illustrated in FIG. 10, which are described in more detail below. A controller may be one example of the computerized apparatus or system.

It should also be noted that the operations of the method 800 may be performed in any suitable order, not necessarily the order depicted in FIG. 8. Further, the method 800 may include additional or fewer operations than those depicted in FIG. 8 to perform the speckle mitigation.

In some embodiments, the speckle includes a plurality of interference artifacts on a projection screen. In some embodiments, the projection screen may include magnetic particles disposed on at least portions of the projection screen.

At step 802, the method 800 may include generating and transmitting one or more signals to an electromagnetic actuator. In some embodiments, the electromagnetic actuator may be positioned at a distance from the magnetic particles disposed on the projection screen. In some implementations, the magnetic particles disposed on the projection screen include ferromagnetic particles or diamagnetic particles, or the magnetic particles may be a combination of ferromagnetic and diamagnetic particles, or other types of material with magnetic properties (e.g., ferrimagnetic, paramagnetic, or superparamagnetic (e.g., nanoparticle) materials). In some implementations, the magnetic particles may include iron powder. In some implementations, the iron powder may be suspended in a binder agent. In some cases, the binder agent may include a resin, e.g., alkyd, and be coated on the projection screen.

The coating or application of the magnetic particles may be in various patterns, such as those shown in FIGS. 2A - 2E. In some variants, the pattern is a non-uniform pattern of deposition of the magnetic particles at a first density at a first portion of the projection screen, and deposition of the magnetic particles at a second density at a second portion of the projection screen, the second density different from the first density. For example, locations 212a and 212n as shown in FIG. 2E may have ferromagnetic particles deposited at different densities or concentration (e.g., per area or per volume). In some variants, the pattern may be a uniform pattern, where the magnetic particles are deposited substantially uniformly across portions of the projection screen. In some variants, the magnetic particles are deposited across the entirety of the projection screen, or at least across the entirety of an active image area of the projection screen, where the active image area includes regions configured for use as a projection screen but excludes any peripheral support regions that provide some other functionality (such as physically supporting the active image area).

In some embodiments, the electromagnetic actuator may include a core and one or more coils disposed about at least portions the core. In some implementations, the core may have a bar configuration (such as that shown in FIG. 1) or a horseshoe configuration (such as that shown in FIG. 3). Various other shapes and configurations may be possible.

In some embodiments, the electromagnetic actuator may be a planar element such as a current-carrying circuit with traces or wires coiled within flexible strips or layers. Examples of the current-carrying circuit are illustrated in FIGS. 5 and 7. In some implementations, the screen may include one or more magnetic elements (e.g., permanent magnet strips), and the current-carrying circuit may be positioned substantially parallel to the screen. Each of the one or more current-carrying circuits may include at least a first trace portion carrying current in a first direction and at least a second trace portion carrying current in an opposing second direction. In some variants, the first and second trace portions may be aligned in an offset configuration with respect to the one or more magnetic elements. In some variants, the first and second trace portions may be aligned with the one or more magnetic elements.

In some embodiments, the one or more signals may be generated by a controller. In some implementations, the one or more signals may be transmitted to a power supply configured to drive current through the electromagnetic actuator, e.g., through its coils. In some cases, the power supply may be external to the electromagnetic actuator, or interior to and be part of the electromagnetic actuator. In some implementations, the one or more signals may be transmitted directly to the electromagnetic actuator. The electromagnetic actuator may have an interface, a processor, and/or memory electrically coupled to the core and/or the coils to receive signals from at least the controller and operate according to the signals.

At step 804, the method 800 may include causing generation of magnetic fields by the electromagnetic actuator based on the transmitted one or more signals. In some embodiments, the controller may send signals configured to cause an electrical current (e.g., via the power supply) to flow through coils or traces associated with the electromagnetic actuator, thereby creating a magnetic field that can cause other magnetic elements to be repelled or attracted depending on the direction of the electrical current. For example, the projection screen may be positioned a distance from the electromagnetic actuator.

At step 806, the method 800 may include causing motion of the projection screen via interaction of the generated magnetic fields with the magnetic particles across the distance, wherein the motion at least partly mitigates a visual perceptibility of the speckle. The motion of the projection screen may be an oscillating motion at a particular frequency (e.g., 30-36 Hz) and/or at a particular displacement (e.g., 1 mm). In some embodiments, the motion of the projection screen may include multiple frequencies. For instance, the motion may include a motion at a first frequency at a first location of the projection screen, and a motion at a second frequency at a second location of the projection screen, the first and second frequencies comprising different frequencies selected from a range.

In some embodiments, the motion of the projection screen may include a motion in an orthogonal direction with respect to the projection screen. In some embodiments, the motion of the projection screen may include a motion in a lateral direction with respect to the projection screen.

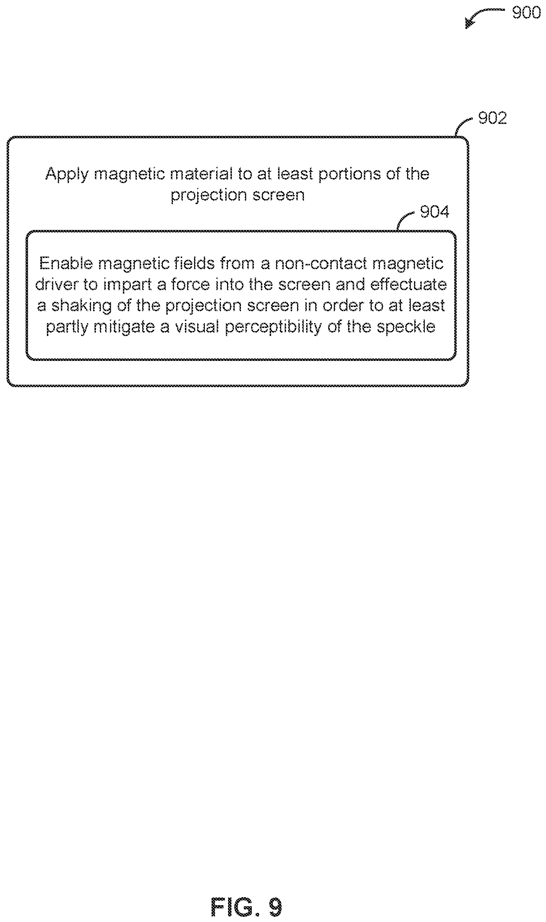

FIG. 9 is a flow diagram illustrating a method 900 for obtaining a projection screen configured to enable speckle mitigation, according to some embodiments. One or more of the functions of the method 900 may be performed by a computerized apparatus or system.

The method 900 may include additional or fewer operations than those depicted in FIG. 9 to perform the acquisition of the projection screen configured to enable speckle mitigation.

At step 902, the method 900 may include applying magnetic material (e.g., ferromagnetic material and/or diamagnetic material) to at least portions of the projection screen. In some embodiments, the ferromagnetic material may be applied so as to enable magnetic fields from a non-contact magnetic driver to impart a force into the screen and effectuate a shaking of the projection screen in order to at least partly mitigate a visual perceptibility of the speckle (step 904).

In some implementations, the force may be an electromotive force that influences an object (having magnetic properties, e.g., has magnetic material disposed on the object) from a distance. In some cases, the applying of the ferromagnetic material may involve coating the at least portions of the projection screen with a suspension comprising ferromagnetic particles. In some variants, the ferromagnetic particles may include or may be based on iron, nickel, cobalt, or an alloy comprising a combination thereof. In some variants, other types of ferromagnetic particles may be used, e.g., gadolinium, neodymium, and/or alnico, or a ferromagnetic ceramic such as one made from iron oxide and another metal (e.g., nickel, zinc).

In some embodiments, the applying of the ferromagnetic material may include affixing one or more sheets of the ferromagnetic material in rolled form. Variations of the sheets may be implemented, such as a sheet having a thickness of less than, e.g., 0.1 mm, 0.2 mm, 0.3 mm, or 0.5 mm.

In some embodiments, the applying of the ferromagnetic material may be non-uniform or substantially uniform across portions of the projection screen. In some implementations, the ferromagnetic particles are spatially positioned at a first density at a first portion of the projection screen and at a second density at a second portion of the projection screen, the second density different from the first density.

### Apparatus

FIG. 10 is a block diagram that shows examples of components of an apparatus capable of implementing various aspects of this disclosure. As with other figures provided herein, the types and numbers of elements shown in FIG. 10 are merely provided by way of example. Other implementations may include more, fewer and/or different types and numbers of elements. According to some examples, the apparatus 1000 may be configured for performing at least some of the methods disclosed herein. In some implementations, the apparatus 1000 may be, or may include, a device configured to control an electromagnetic actuator for causing motion of a projection screen. In some implementations, the apparatus 1000 may be, or may include, a device that includes an electromagnetic actuator for causing motion of the projection screen. In some implementations, the apparatus 1000 may be, or may include, a device configured to apply or cause application of magnetic material to at least a portion of a projection screen.

In this example, the apparatus 1000 includes an interface system 1005 and a control system 1010. The interface system 1005 may, in some implementations, be configured for communication with one or more other devices. The interface system 1005 may, in some implementations, be configured for exchanging control information and associated data. The control information and associated data may, in some examples, pertain to one or more software applications that the apparatus 1000 is executing.

The interface system 1005 may include one or more network interfaces and/or one or more external device interfaces, such as one or more universal serial bus (USB) interfaces. According to some implementations, the interface system 1005 may include one or more wireless interfaces. In some examples, the interface system 1005 may include one or more interfaces between the control system 1010 and a memory system, such as the optional memory system 1015 shown in FIG. 10. However, the control system 1010 may include a memory system in some instances. The interface system 1005 may, in some implementations, be configured for receiving signal input or providing signal to, e.g., an electromagnetic actuator (e.g., 100, 300, 402, 506, 506a, 706, 706a) or a power supply.

The control system 1010 may, for example, include a general purpose single- or multichip processor, a digital signal processor (DSP), an application specific integrated circuit (ASIC), a field programmable gate array (FPGA) or other programmable logic device, discrete gate or transistor logic, and/or discrete hardware components. A controller apparatus may be an example of the control system 1010 or a portion of the control system 1010.

In some implementations, the control system 1010 may reside in more than one device. For example, in some implementations a portion of the control system 1010 may reside in a device within one of the environments depicted herein and another portion of the control system 1010 may reside in a device that is outside the environment, such as a server, a mobile device (e.g., a smartphone or a tablet computer), etc. In other examples, a portion of the control system 1010 may reside in a device within one environment and another portion of the control system 1010 may reside in one or more other devices of the environment. For example, a portion of the control system 1010 may reside in a device that is implementing a cloud-based service, such as a server, and another portion of the control system 1010 may reside in another device that is implementing the cloud-based service, such as another server, a memory device, etc. The interface system 1005 also may, in some examples, reside in more than one device.

In some implementations, the control system 1010 may be configured for performing, at least in part, the methods disclosed herein. According to some examples, the control system 1010 may be configured to cause an electromagnetic actuator to generate an electromotive force by transmitting or receiving control signals, or the like. According to some examples, the control system 1010 may be configured to apply or cause application of magnetic material (e.g., ferromagnetic powder) to at least a portion of a projection screen to obtain a projection screen constructed to be usable with the embodiments and implementations described herein. According to other examples, the control system 1010 may be configured to obtain the applicable magnetic material, e.g., by mixing the magnetic material with a resin.

Some or all of the methods described herein may be performed by one or more devices according to instructions (e.g., software) stored on one or more non-transitory media. Such non-transitory media may include memory devices such as those described herein, including but not limited to random access memory (RAM) devices, read-only memory (ROM) devices, etc. The one or more non-transitory media may, for example, reside in the optional memory system 1015 shown in FIG. 10 and/or in the control system 1010. Accordingly, various innovative aspects of the subject matter described in this disclosure can be implemented in one or more non-transitory media having software stored thereon. The software may, for example, include instructions for determining gain parameters, applying gain transition functions, determining inverse gain transition functions, applying inverse gain transition functions, distribution bits for gain control with respect to a bitstream, etc. The software may, for example, be executable by one or more components of a control system such as the control system 1010 of FIG. 10.

Some aspects of present disclosure include a system or device configured, e.g., programmed, to perform one or more examples of the disclosed methods, and a tangible computer readable medium, e.g., a disc, which stores code for implementing one or more examples of the disclosed methods or steps thereof. For example, some disclosed systems can be or include a programmable general purpose processor, digital signal processor, or microprocessor, programmed with software or firmware and/or otherwise configured to perform any of a variety of operations on data, including an embodiment of disclosed methods or steps thereof. Such a general purpose processor may be or include a computer system including an input device, a memory, and a processing subsystem that is programmed (and/or otherwise configured) to perform one or more examples of the disclosed methods (or steps thereof) in response to data asserted thereto.

Some embodiments may be implemented as a configurable (e.g., programmable) digital signal processor (DSP) that is configured (e.g., programmed and otherwise configured) to perform required processing on audio signal(s), including performance of one or more examples of the disclosed methods. Alternatively, embodiments of the disclosed systems (or elements thereof) may be implemented as a general purpose processor, e.g., a personal computer (PC) or other computer system or microprocessor, which may include an input device and a memory, which is programmed with software or firmware and/or otherwise configured to perform any of a variety of operations including one or more examples of the disclosed methods. Alternatively, elements of some embodiments of the inventive system are implemented as a general purpose processor or DSP configured (e.g., programmed) to perform one or more examples of the disclosed methods, and the system also includes other elements. The other elements may include one or more loudspeakers and/or one or more microphones. A general purpose processor configured to perform one or more examples of the disclosed methods may be coupled to an input device. Examples of input devices include, e.g., a mouse and/or a keyboard. The general purpose processor may be coupled to a memory, a display device, etc.

Another aspect of present disclosure is a computer readable medium, such as a disc or other tangible storage medium, which stores code for performing, e.g., by a coder executable to perform, one or more examples of the disclosed methods or steps thereof.

While specific embodiments of the present disclosure and applications of the disclosure have been described herein, it will be apparent to those of ordinary skill in the art that many variations on the embodiments and applications described herein are possible without departing from the scope of the disclosure described and claimed herein. It should be understood that while certain forms of the disclosure have been shown and described, the disclosure is not to be limited to the specific embodiments described and shown or the specific methods described.

## Claims

1. A system for screen shaking, the system comprising:
a projection screen (116) comprising magnetic material (118) affixed in a stretchable binder;
at least one electromagnetic actuator (100) disposed at a distance (d) from the screen and configured to vibrate the projection screen via magnetic fields; and
a controller (112) configured for signal communication with the at least one electromagnetic actuator, the controller configured to:
generate and transmit one or more signals to the at least one electromagnetic actuator to cause generation of the magnetic fields by the at least one electromagnetic actuator, wherein the generated magnetic fields interact with the magnetic material to cause the projection screen to vibrate,
**characterized in that**
the magnetic material comprises ferromagnetic particles disposed on a side of the projection screen in a non-uniform or periodic pattern, the non-uniform or periodic pattern comprising a first density of the ferromagnetic particles at a first portion of the projection screen and a second density of the ferromagnetic particles at a second portion of the projection screen.

2. The system of claim 1, wherein the at least one electromagnetic actuator comprises a ferromagnetic core and one or more coils disposed about at least a portion of the ferromagnetic core.

3. The system of any of claims 1-2, wherein:
the projection screen further comprises one or more magnetic elements;
the at least one electromagnetic actuator comprises a substantially planar element substantially parallel to the projection screen, the at least one electromagnetic actuator comprising one or more current-carrying circuits, each of the one or more current-carrying circuits comprising a first trace carrying current in a first direction and a second trace carrying current in an opposing second direction, the first and second traces aligned in an offset configuration with respect to the one or more magnetic elements; and
the vibration of the projection screen comprises a motion in an orthogonal direction with respect to the projection screen.

4. The system of any of claims 1-3, wherein:
the projection screen further comprises one or more magnetic elements;
the at least one electromagnetic actuator comprises a substantially planar element substantially parallel to the projection screen, the actuator comprising one or more current-carrying traces, each of the one or more current-carrying traces comprising a first portion carrying current in a first direction and a second portion carrying current in an opposing second direction, the first and second portions aligned with the one or more magnetic elements; and
the vibration of the projection screen comprises a motion in a lateral direction with respect to the projection screen.

5. The system of any of claims 1-4, wherein the magnetic material comprises iron powder suspended in the stretchable binder, the stretchable binder comprising a resin and coated on the projection screen.

6. The system of any of claims 1-5, wherein the resin comprises alkyd.

7. The system of any of claims 1-6, wherein generating and transmitting one or more signals to the electromagnetic actuator comprises generating and transmitting one or more signals that cause the projection screen to vibrate at one or more prescribed frequencies, each between 30 Hz to 36 Hz inclusive.

8. The system of any of claims 1-7, wherein the motion of the projection screen comprises a motion at a first frequency at a first location of the projection screen, and a motion at a second frequency at a second location of the projection screen, the first and second frequencies comprising different frequencies selected from a range of 30 Hz to 36 Hz inclusive.

9. The system of any of claims 1-8, wherein the stretchable binder comprises an elastic modulus between 30 and 100 megapascals.

10. The system of any of claims 1-9, wherein the stretchable binder is sufficiently stretchable so as to allow the projection screen to be stretched during mounting.

11. The system of any of claims 1-10, wherein the magnetic material comprises ferromagnetic particles or diamagnetic particles, or a combination thereof, deposited at least partly on a side of the projection screen in a prescribed pattern.

12. A method of mitigating speckle, wherein the speckle comprises a plurality of interference artifacts on a projection screen (116), and wherein the projection screen comprises magnetic material (118) disposed on at least portions of the projection screen, the method comprising:
generating and transmitting one or more signals to an electromagnetic actuator (100);
wherein the electromagnetic actuator is positioned at a distance (d) from the magnetic material, the magnetic material comprising magnetic particles;
wherein the magnetic particles are affixed in a stretchable binder agent and disposed on the projection screen;
wherein the electromagnetic actuator generates magnetic fields in response to the transmitted one or more signals; and
wherein the generated magnetic fields interact with the magnetic material to move the projection screen for at least partly mitigating a visual perceptibility of the speckle,
**characterized in that**
the magnetic particles disposed on the projection screen comprise ferromagnetic particles or diamagnetic particles, or a combination thereof, deposited at least partly on a side of the projection screen in a non-uniform pattern of deposition at a first non-zero density at a first portion of the projection screen, and at a second non-zero density at a second portion of the projection screen, the second density different from the first density.

13. The method of claim 12, wherein the magnetic particles comprise iron powder suspended in the stretchable binder agent, the stretchable binder agent comprising a resin and coated on the projection screen.

14. The method of any of claims 12-13, wherein the motion of the projection screen comprises a motion in an orthogonal direction with respect to the projection screen, or a motion in a lateral direction with respect to the projection screen.

15. The method of any one of claims 12-14, wherein the electromagnetic actuator comprises a substantially planar element substantially parallel to the projection screen and wherein the substantially planar element comprises one or more current-carrying circuits aligned in a prescribed configuration with respect to the magnetic material.

## Patentansprüche

1. System zum Schütteln eines Siebs, wobei das System Folgendes umfasst:
ein Vorsprungssieb (116), das magnetisches Material (118) umfasst, das in einem dehnbaren Bindemittel fixiert ist;
mindestens eine elektromagnetische Betätigungsvorrichtung (100), die in einem Abstand (d) von dem Sieb angeordnet ist und so konfiguriert ist, dass sie das Vorsprungssieb über Magnetfelder vibriert; und
eine Steuereinheit (112), die für Signalkommunikation mit der mindestens einen elektromagnetischen Betätigungsvorrichtung konfiguriert ist, wobei die Steuereinheit konfiguriert ist zum:
Erzeugen und Übertragen von einem oder mehreren Signalen an die mindestens eine elektromagnetische Betätigungsvorrichtung, um Erzeugung der Magnetfelder durch die mindestens eine elektromagnetische Betätigungsvorrichtung zu bewirken, wobei die erzeugten Magnetfelder mit dem magnetischen Material interagieren, um zu bewirken, dass das Vorsprungssieb vibriert,
**dadurch gekennzeichnet, dass**
das magnetische Material ferromagnetische Partikel umfasst, die auf einer Seite des Vorsprungssiebs in einem nicht einheitlichen oder periodischen Muster angeordnet sind, wobei das nicht einheitliche oder periodische Muster eine erste Dichte der ferromagnetischen Partikel in einem ersten Abschnitt des Vorsprungssiebs und eine zweite Dichte der ferromagnetischen Partikel in einem zweiten Abschnitt des Vorsprungssiebs umfasst.

2. System nach Anspruch 1, wobei mindestens eine elektromagnetische Betätigungsvorrichtung einen ferromagnetischen Kern und eine oder mehrere Spulen, die um mindestens einen Abschnitt des ferromagnetischen Kerns angeordnet sind, umfasst.

3. System nach einem der Ansprüche 1 oder 2, wobei:
das Vorsprungssieb weiter ein oder mehrere magnetische Elemente umfasst;
die mindestens eine elektromagnetische Betätigungsvorrichtung ein im Wesentlichen planares Element umfasst, das im Wesentlichen parallel zum Vorsprungssieb ist, wobei die mindestens eine elektromagnetische Betätigungsvorrichtung einen oder mehrere stromführende Stromkreise umfasst, wobei jeder des einen oder der mehreren stromführenden Stromkreise eine erste stromführende Leiterbahn in einer ersten Richtung und eine zweite stromführende Leiterbahn in einer entgegengesetzten zweiten Richtung umfasst, wobei die erste und die zweite stromführende Leiterbahn in einer versetzten Konfiguration in Bezug auf das eine oder die mehreren magnetischen Elemente ausgerichtet sind; und
die Vibration des Vorsprungssiebs eine Bewegung in einer orthogonalen Richtung zum Vorsprungssieb umfasst.

4. System nach einem der Ansprüche 1 bis 3, wobei:
das Vorsprungssieb weiter ein oder mehrere magnetische Elemente umfasst;
die mindestens eine elektromagnetische Betätigungsvorrichtung ein im Wesentlichen planares Element umfasst, das im Wesentlichen parallel zum Vorsprungssieb ist, wobei die Betätigungsvorrichtung eine oder mehrere stromführende Leiterbahnen umfasst, wobei jeder der einen oder der mehreren stromführenden Leiterbahnen einen ersten stromführende Abschnitt in einer ersten Richtung und einen zweiten stromführenden Abschnitt in einer entgegengesetzten zweiten Richtung umfasst, wobei der erste und zweite Abschnitt mit dem einen oder den mehreren magnetischen Elementen ausgerichtet sind; und
die Vibration des Vorsprungssiebs eine Bewegung in einer seitlichen Richtung in Bezug auf das Vorsprungssieb umfasst.

5. System nach einem der Ansprüche 1-4, wobei das magnetische Material Eisenpulver umfasst, das in dem dehnbaren Bindemittel suspendiert ist, wobei das dehnbare Bindemittel ein Harz umfasst und mit dem das Vorsprungssieb beschichtet ist.

6. System nach einem der Ansprüche 1-5, wobei das Harz Alkydharz umfasst.

7. System nach einem der Ansprüche 1 bis 6, wobei Erzeugen und Übertragen von einem oder mehreren Signalen an die elektromagnetische Betätigungsvorrichtung Erzeugen und Übertragen eines oder mehrerer Signale umfasst, die bewirken, dass das Vorsprungssieb mit einer oder mehreren vorgeschrieben Frequenzen jeweils zwischen 30 Hz und einschließlich 36 Hz vibriert.

8. System nach einem der Ansprüche 1-7, wobei die Bewegung des Vorsprungssiebs eine Bewegung mit einer ersten Frequenz an einer ersten Position des Vorsprungssiebs und eine Bewegung mit einer zweiten Frequenz an einer zweiten Position des Vorsprungssiebs umfasst, wobei die erste und die zweite Frequenz unterschiedliche Frequenzen umfassen, ausgewählt aus einem Bereich von 30 Hz bis einschließlich 36 Hz.

9. System nach einem der Ansprüche 1-8, wobei das dehnbare Bindemittel einen Elastizitätsmodul zwischen 30 und 100 Megapascal umfasst.

10. System nach einem der Ansprüche 1-9, wobei das dehnbare Bindemittel ausreichend dehnbar ist, um zu ermöglichen, dass das Vorsprungssieb während Montage gedehnt wird.

11. System nach einem der Ansprüche 1-10, wobei das magnetische Material ferromagnetische Partikel oder diamagnetische Partikel oder eine Kombination davon umfasst, die zumindest teilweise auf einer Seite des Vorsprungssiebs in einem vorgeschriebenen Muster abgelagert sind.

12. Verfahren zur Minderung von Speckle-Effekten, wobei die Speckle-Effekte eine Vielzahl von Störartefakten auf einem Vorsprungssieb (116) umfassen, und wobei das Vorsprungssieb magnetisches Material (118) umfasst, das mindestens auf Abschnitten des Vorsprungssiebs angeordnet ist, wobei das Verfahren Folgendes umfasst:
Erzeugen und Übertragen eines oder mehrerer Signale an eine elektromagnetische Betätigungsvorrichtung (100);
wobei die elektromagnetische Betätigungsvorrichtung in einem Abstand (d) von dem magnetischen Material angeordnet ist, wobei das magnetische Material magnetische Partikel umfasst;
wobei die magnetischen Partikel in einem dehnbaren Bindemittel fixiert und auf dem Vorsprungssieb angeordnet sind;
wobei die elektromagnetische Betätigungsvorrichtung als Reaktion auf das eine oder die mehreren übertragenen Signale Magnetfelder erzeugt; und
wobei die erzeugten Magnetfelder mit dem magnetischen Material interagieren, um das Vorsprungssieb zu bewegen, um eine visuelle Wahrnehmbarkeit der Speckle-Effekte zumindest teilweise zu mindern,
**dadurch gekennzeichnet, dass**
die auf dem Vorsprungssieb angeordneten magnetischen Partikel ferromagnetische Partikel oder diamagnetische Partikel oder eine Kombination davon umfassen, die zumindest teilweise auf einer Seite des Vorsprungssiebs in einem nicht einheitlichen Ablagerungsmuster mit einer ersten von Null unterschiedlichen Dichte in einem ersten Abschnitt des Vorsprungssiebs und mit einer zweiten von Null unterschiedlichen Dichte in einem zweiten Abschnitt des Vorsprungssiebs abgelagert sind, wobei die zweite Dichte von der ersten Dichte unterschiedlich ist.

13. Verfahren nach Anspruch 12, wobei die magnetischen Partikel Eisenpulver umfassen, das in dem dehnbaren Bindemittel suspendiert ist, wobei das dehnbare Bindemittel ein Harz umfasst und das Vorsprungssieb damit beschichtet ist.

14. Verfahren nach einem der Ansprüche 12-13, wobei die Bewegung des Vorsprungssiebs eine Bewegung in einer orthogonalen Richtung in Bezug auf das Vorsprungssieb oder eine Bewegung in einer seitlichen Richtung in Bezug auf das Vorsprungssieb umfasst.

15. Verfahren nach einem der Ansprüche 12-14, wobei die elektromagnetische Betätigungsvorrichtung ein im Wesentlichen planares Element umfasst, das im Wesentlichen parallel zum Vorsprungssieb ist, und wobei das im Wesentlichen planare Element einen oder mehrere stromführende Stromkreise umfasst, die in einer vorgeschriebenen Konfiguration in Bezug auf das magnetische Material ausgerichtet sind.

## Revendications

1. Système de secousse d'écran, ce système comprenant :
un écran de projection (116) comprenant un matériau magnétique (118) fixé dans un liant extensible ;
au moins un actionneur électromagnétique (100) disposé à une distance (d) de l'écran et configuré pour faire vibrer l'écran de projection via des champs magnétiques ; et
un dispositif de commande (112) configuré pour une communication par signaux avec le au moins un actionneur électromagnétique, le dispositif de commande étant configuré pour :
générer et transmettre un ou plusieurs signaux à l'au moins un actionneur électromagnétique pour provoquer une génération de champs magnétiques par le au moins un actionneur électromagnétique, dans lequel les champs magnétiques générés interagissent avec le matériau magnétique pour amener l'écran de projection à vibrer,
**caractérisé en ce que**
le matériau magnétique comprend des particules ferromagnétiques disposées sur un côté de l'écran de projection selon un motif non uniforme ou périodique, le motif non uniforme ou périodique comprenant une première densité des particules ferromagnétiques sur une première partie de l'écran de projection et une seconde densité des particules ferromagnétiques sur une seconde partie de l'écran de projection.

2. Système selon la revendication 1, dans lequel le au moins un actionneur électromagnétique comprend un noyau ferromagnétique et une ou plusieurs bobines disposées autour de l'au moins une partie du noyau ferromagnétique.

3. Système selon l'une quelconque des revendications 1-2, dans lequel :
l'écran de projection comprend en outre un ou plusieurs éléments magnétiques ;
le au moins un actionneur électromagnétique comprend un élément sensiblement plan, sensiblement parallèle à l'écran de projection, le au moins un actionneur électromagnétique comprenant un ou plusieurs circuits de transport de courant, chacun des un ou plusieurs circuits de transport de courant comportant une première piste transportant un courant dans une première direction et une seconde piste transportant un courant dans une seconde direction opposée, les première et seconde pistes étant alignées selon une configuration décalée par rapport aux un ou plusieurs éléments magnétiques ;
la vibration de l'écran de projection comprend un mouvement dans une direction orthogonale par rapport à l'écran de projection.

4. Système selon l'une quelconque des revendications 1-3, dans lequel :
l'écran de projection comprend en outre un ou plusieurs éléments magnétiques ;
le au moins un actionneur électromagnétique comprend un élément sensiblement plan sensiblement parallèle à l'écran de projection, l'actionneur comprenant une ou plusieurs pistes de transport de courant, chacune des une ou plusieurs pistes de transport de courant comportant une première partie transportant du courant dans une première direction et une seconde partie transportant du courant dans une seconde direction opposée, les première et seconde portions étant alignées avec les un ou plusieurs éléments magnétiques ; et
la vibration de l'écran de projection comprend un mouvement latéral par rapport à l'écran de projection.

5. Système selon l'une quelconque des revendications 1-4, dans lequel le matériau magnétique comprend de la poudre de fer suspendue dans le liant extensible, le liant extensible comprenant une résine et étant appliqué en revêtement sur l'écran de projection.

6. Système selon l'une quelconque des revendications 1-5, dans lequel la résine comprend un alkyde.

7. Système selon l'une quelconque des revendications 1-6, dans lequel la génération et la transmission d'un ou plusieurs signaux à l'actionneur électromagnétique comprennent la génération et la transmission d'un ou plusieurs signaux qui amènent l'écran de projection à vibrer à une ou plusieurs fréquences prescrites, chacune comprise entre 30 Hz et 36 Hz inclus.

8. Système selon l'une quelconque des revendications 1-7, dans lequel le mouvement de l'écran de projection comprend un mouvement à une première fréquence à un premier emplacement de l'écran de projection, et un mouvement à une seconde fréquence à un second emplacement de l'écran de projection, les première et seconde fréquences comprenant des fréquences différentes sélectionnées dans une plage de 30 Hz à 36 Hz inclus.

9. Système selon l'une quelconque des revendications 1-8, dans lequel le liant extensible comprend un module d'élasticité compris entre 30 et 100 mégapascals.

10. Système selon l'une quelconque des revendications 1-9, dans lequel le liant extensible est suffisamment extensible pour permettre à l'écran de projection d'être étiré lors du montage.

11. Système selon l'une quelconque des revendications 1-10, dans lequel le matériau magnétique comprend des particules ferromagnétiques ou des particules diamagnétiques, ou une combinaison de celles-ci, déposées au moins partiellement sur un côté de l'écran de projection selon un motif prescrit.

12. Procédé d'atténuation du chatoiement, dans lequel le chatoiement comprend une pluralité d'artefacts d'interférence sur un écran de projection (116), et dans lequel l'écran de projection comprend un matériau magnétique (118) disposé sur au moins des parties de l'écran de projection, le procédé comprenant :
générer et transmettre un ou plusieurs signaux à un actionneur électromagnétique (100) ;
dans lequel l'actionneur électromagnétique est positionné à une distance (d) du matériau magnétique, le matériau magnétique comprenant des particules magnétiques ;
dans lequel les particules magnétiques sont fixées dans un agent liant extensible et disposées sur l'écran de projection ;
dans lequel l'actionneur électromagnétique génère des champs magnétiques en réponse aux un ou plusieurs signaux transmis ; et
dans lequel les champs magnétiques générés interagissent avec le matériau magnétique pour déplacer l'écran de projection afin d'atténuer au moins partiellement la perception visuelle du chatoiement,
**caractérisé en ce que**
les particules magnétiques disposées sur l'écran de projection comprennent des particules ferromagnétiques ou des particules diamagnétiques, ou une combinaison de celles-ci, déposées au moins partiellement sur un côté de l'écran de projection selon un motif de dépôt non uniforme à une première densité non nulle au niveau d'une première partie de l'écran de projection, et à une seconde densité non nulle au niveau d'une seconde partie de l'écran de projection, la seconde densité étant différente de la première densité.

13. Procédé selon la revendication 12, dans lequel les particules magnétiques comprennent de la poudre de fer en suspension dans l'agent liant extensible, l'agent liant extensible comprenant une résine et étant appliqué en revêtement sur l'écran de projection.

14. Procédé selon l'une quelconque des revendications 12-13, dans lequel le mouvement de l'écran de projection comprend un mouvement dans une direction orthogonale par rapport à l'écran de projection, ou un mouvement dans une direction latérale par rapport à l'écran de projection.

15. Procédé selon l'une quelconque des revendications 12-14, dans lequel l'actionneur électromagnétique comprend un élément sensiblement plan sensiblement parallèle à l'écran de projection, et dans lequel l'élément sensiblement planaire comprend un ou plusieurs circuits de transport de courant alignés dans une configuration prescrite par rapport au matériau magnétique.
